# EUROPEAN PATENT APPLICATION

(11) **EP 1 843 573 A2**
(43) Date of publication of application: **10.10.2007**
(21) Application number: 07006066.0
(22) Date of filing: 23.03.2007
(51) Int. Cl.: H04N 5/00, H04N 5/765

(54) **Multi-room personal video storage apparatus**

(30) Priority: 04.04.2006 KR 20060030343
(71) Applicant: Arion Technology Inc., Gyeonggi-Do, 431-080 (KR)
(72) Inventor: Kwak, Hoon, Seoul, 158-864 (KR); Cho, Byung-Kyung, Hwaseong-si, Gyeonggi-do, 445-710 (KR); Kang, Hyuk-Jae, Ansan-si, Danwon-gu,Gyeonggi-Do, 425-710 (KR); Park, Hak-Bum, Seoul, 151-818 (KR); Kang, Byung-Ju, Songpa-gu Seoul, 138-882 (KR)
(74) Representative: Schumacher & Willsau

(57) **Abstract**

The present invention relates to a multi-room personal video storage apparatus, and more specifically, to a multi-room personal video storage apparatus, in which a single apparatus transmits independent satellite broadcast channels to televisions (TV) that are respectively installed in two rooms and allows a user in a first room to monitor the contents shown on the TV in a second room. According to the present invention, it is possible to view different satellite broadcasts in two rooms using a set-top box or a video storage apparatus, and broadcast contents shown in each room can be independently stored or played back.

## Description

### BACKGROUND OF THE INVENTION

### Field of the Invention

The present invention relates to a multi-room personal video storage apparatus, and more specifically, to a multi-room personal video storage apparatus, in which a single apparatus transmits independent satellite broadcast channels to televisions (TV) that are installed in two rooms, respectively, and allows a user in a first room to monitor the contents shown on a TV in a second room.

### Background of the Related Art

Standards of digital broadcasting are largely divided into digital video broadcasting (DVB) of Europe and vestigial sideband broadcasting (VSB) of the United States. Among these, VSB is adopted as a standard of digital televisions (TV) in Korea. However, digital audio broadcasting (DAB) adopts DVB as a standard, and DAB is a concept limited to radio broadcasting that uses satellites in its early stage, but is gradually evolved into digital multimedia broadcasting (DMB) capable of providing moving image services.

DVB is characterized by enhanced sharability of a variety of media, such as a cable TV, satellite, terrestrial wave, satellite master antenna TV (SMATV), and the like, and essentially employs moving picture experts group 2 (MPEG-2) for encoding and compressing signals.

In addition, DVB specifies to use a common scrambling algorithm for a conditional access system.

DVB has lower specifications, such as DVB-S (satellite) of satellite digital TV broadcasting, DVB-C (cable) of digital cable TV broadcasting, DVB-T of terrestrial wave digital broadcasting, and the like.

Conventionally, in order to receive a digital satellite broadcast of DVB, it is needed to be provided with equipments, such as a parabola antenna for capturing a broadcast signal transmitted from satellites, a set-top box for extracting a video and an audio signal from the broadcast signal and transmitting the extracted video and audio signals to a TV, a television set, and the like.

The set-top box contains a tuner and a decoding apparatus for extracting video and audio from broadcast signals, and an apparatus having a storage device, such as a hard disk drive (HDD), that functions as a personal video recorder (PVR) is also introduced.

Generally, one TV needs one set-top box to show satellite broadcast. However, such a set-top box or PVR is quite expensive, and thus purchasing several set-top boxes is a big burden in cost to a home possessing a plurality of TVs.

Further, although several set-top boxes are purchased, since cabling works are needed to connect an antenna to each device, a user needs to pay additional cost and suffers from inconvenience of cabling.

### SUMMARY OF THE INVENTION

Therefore, the present invention has been made in an effort to solve the above-mentioned problems, and it is an object of the present invention to provide a multi-room personal video storage apparatus, in which a single apparatus transmit digital satellite broadcasts to a plurality of TVs installed in other rooms and allows a user in a room where a main apparatus is installed to monitor broadcast contents shown in another room.

Another object of the present invention is to provide a multi-room personal video storage apparatus, in which a user in each room is allowed to swap broadcast contents with others in another room.

Still another object of the present invention is to provide a multi-room personal video storage apparatus, in which an HDD is installed in an apparatus that can receive digital satellite broadcasts, so that digital broadcast signals can be conveniently stored and played back, and broadcast contents shown in each room can be independently stored within a single apparatus and separately used.

Yet another object of the present invention is to provide a multi-room personal video storage apparatus, in which preferred channels, volume, language, and the like of each TV are separately set and stored in the TV to allow a user to conveniently view a broadcast to the user's taste, and the set information is exchanged between TVs by inputting a room switch command to allow the user to view the broadcast as is set by the user even when the user moves to another room.

To accomplish the above object, according to one aspect of the present invention, there is provided a multi-room personal video storage apparatus comprising: a plurality of tuners for demodulating two channels contained in a digital satellite broadcast signal and generating and outputting two transport stream (TS) signals; a plurality of CPUs for converting the two transport stream signals inputted from the tuners into two video and audio signals and outputting the converted video and audio signals; a plurality of multiplexers for selecting TVs to which the two video and audio signals are outputted under the control of the CPUs; an AV switch matrix for outputting the video and audio signals outputted from the multiplexers to a selected TV; and a scart connector for receiving a video and an audio signal inputted from a video cassette recorder (VCR) and transmitting the video and audio signals that are outputted to the TV, wherein the TVs comprises a first TV and a second TV respectively installed in a first room and a second room which are spatially separated each other.

The multiplexers comprise: a first multiplexer for selecting a Y/C signal (a composite color signal) and outputting the selected Y/C signal to the AV switch matrix if two Y/C signals are inputted thereto from the CPUs; and a second multiplexer for selecting an RGB signal and outputting the selected RGB signal to the AV switch matrix if two RGB signals are inputted thereto from the CPUs, and the AV switch matrix transmits the Y/C signal or the RGB signal, which is outputted from the first multiplexer or the second multiplexer, to the first TV and displays the Y/C signal or the RGB signal through on first TV.

The first multiplexer selects an S/PDIF signal and outputs the selected S/PDIF signal to an S/PDIF output terminal if two S/PDIF signals are inputted thereto from the CPUs, and the S/PDIF output terminal transmits the S/PDIF signal, which is outputted from the first multiplexer, to a separate audio apparatus and outputs the S/PDIF signal.

The multiplexers comprise a third multiplexer for selecting and outputting a set of CVBS and audio R/L signals if two sets of CVBS and audio R/L signals are inputted thereto from the CPUs; a fourth multiplexer connected to the scart connector, for selecting and outputting either the video and audio signals inputted from the VCR or the video and audio signals outputted to the first TV; and a fifth multiplexer for selecting and outputting either the CVBS and audio R/L signals inputted from the third multiplexer or the video and audio signals outputted from the fourth multiplexer, wherein the signals outputted from the fifth multiplexer are transmitted to the second TV and outputted through the second TV.

The multiplexers further comprise a sixth multiplexer for converting the signals outputted from the fifth multiplexer into a radio frequency (RF) signal and outputting the converted RF signal to an RF modulator, wherein the RF modulator transmits the RF signal to the second TV and outputs the RF signal through the second TV.

The multi-room personal video storage apparatus of the present invention further comprises an HDD for recording and storing the video and audio signals.

In addition, the multi-room personal video storage apparatus of the present invention further comprises an RF remote control receiving unit for receiving a control signal of an RF method inputted from a second remote controller placed in the second room, wherein the RF remote control receiving unit is placed in the first room and transmits the control signal to the CPU.

In addition, the multi-room personal video storage apparatus of the present invention further comprises memory for storing data on setting information by the TV, wherein the data is stored if a user selects any one of a preferred channel, volume, password, language selection, and the like, and sets information thereon.

The first multiplexer outputs the other Y/C and S/PDIF signals respectively to the AV switch matrix and the S/PDIF output terminal if a room switch command is inputted thereto from the CPU, the second multiplexer outputs the other RGB signal to the AV switch matrix if a room switch command is inputted thereto from the CPU, the AV switch matrix transmits the Y/C signal or the RGB signal outputted from the first multiplexer or the second multiplexer to the first TV to allow the transmitted signal to be displayed on the first TV, and the S/PDIF output terminal transmits the S/PDIF signal outputted from the first multiplexer to a separate audio apparatus to allow the transmitted S/PDIF signal to be outputted to the outside through the audio apparatus.

The third multiplexer outputs the other CVBS and audio R/L signals if a room switch command is inputted thereto from the CPU, the fourth multiplexer outputs the other video and audio signals if a room switch command is inputted thereto from the CPU, and the fifth multiplexer selects either the other CVBS and audio R/L signals inputted from the third multiplexer or the other video and audio signals outputted from the fourth multiplexer and transmits the selected signals to the second TV.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 a configuration diagram showing the connectivity of a video storage apparatus according to a first embodiment of the present invention;

FIG. 2 is a block diagram showing the configuration of the video storage apparatus according to the first embodiment of the present invention;

FIG. 3 a configuration diagram showing the connectivity of a video storage apparatus according to a second embodiment of the present invention; and

FIG. 4 a configuration diagram showing the connectivity of a video storage apparatus according to a third embodiment of the present invention.

### DETAILED DESCRIPTION OF THE PREFERRED EMBODIMENT

Hereinafter, a multi-room personal video storage apparatus according to an embodiment of the present invention (hereinafter, referred to as a 'video storage apparatus 200') will be described with reference to the accompanying drawings.

First embodiment

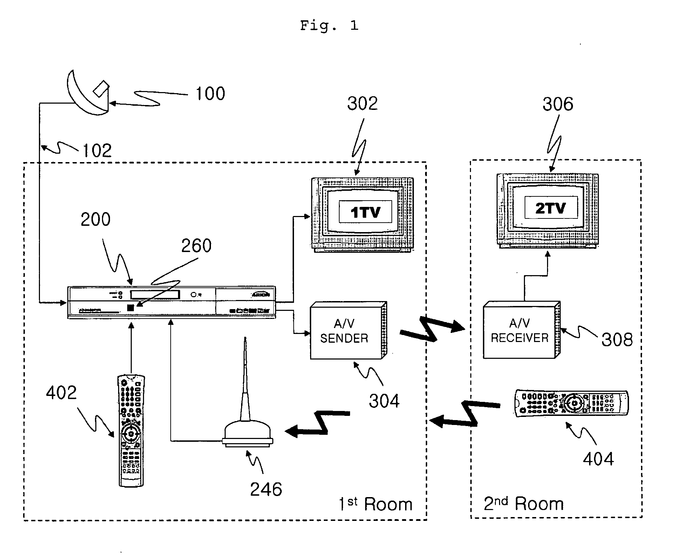

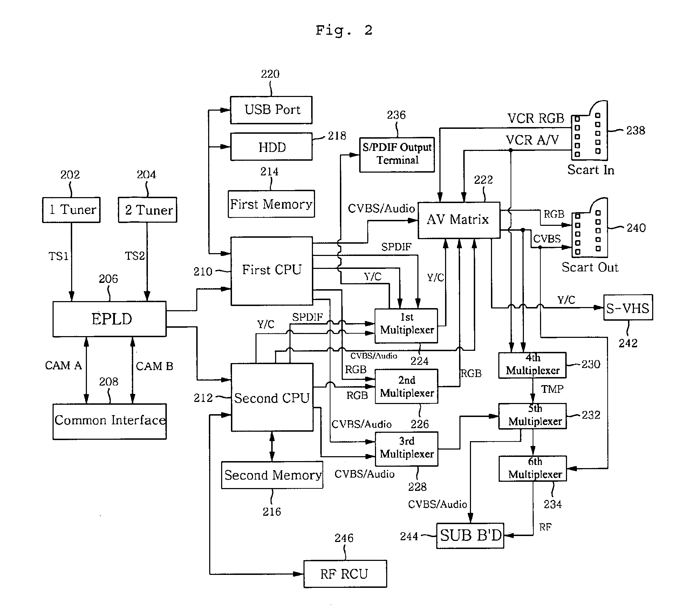

FIG. 1 a configuration diagram showing the connectivity of a video storage apparatus 200 according to a first embodiment of the present invention, and FIG. 2 is a block diagram showing the configuration of the video storage apparatus 200 according to the first embodiment of the present invention.

Referring to FIGS. 1 and 2, the video storage apparatus 200 separates a satellite signal inputted from an antenna 100 connected through a coaxial cable into a video and an audio signal and transmits the separated video and audio signals to a TV. A first TV 302 and a second TV 306 are respectively installed in a first room and a second room.

The video storage apparatus 200 is preferably installed in a room where the apparatus can be connected to the antenna 100 and receive satellite signals, and the room where the video storage apparatus 200 is installed is the first room. The first TV 302, an A/V transmitter 304, and an RF remote control receiving unit 246 are installed in the first room.

The second TV 306 and an A/V receiver 308 are installed in the second room.

A first remote controller 402 of a general infrared input method is used in the first room to remotely control the video storage apparatus 200, and an infrared remote control receiver 260 for receiving infrared control signals transmitted from the first remote controller 402 is provided on the front panel of the video storage apparatus 200.

The video and audio signals outputted from the video storage apparatus 200 are transmitted to the first TV 302 and outputted as video and audio. A terminal for transmitting video between the video storage apparatus 200 and the first TV 302 can use a method of an ultra-high frequency (UHF) coaxial cable, composite, component, S-VHS 242, digital video interface (DVI), scart, and the like. Other than these, a wireless transmission terminal of an RF transmission method also can be used.

In addition, the A/V transmitter 304 for converting the video and audio signals into an RF signal and transmitting the converted RF signal is installed in the video storage apparatus 200. The A/V transmitter 304 is a transmission apparatus for wirelessly transmitting video and audio to be outputted through the second TV 306. If The A/V transmitter transmits the RF signal to the A/V receiver 308 installed in the second room, the A/V receiver 308 converts the RF signal into a video and an audio signal and outputs the video and audio signals through the second TV 306. Accordingly, since the video storage apparatus 200 can wirelessly transmit video and audio to the second TV 306, a user can view the broadcast through a TV in another room.

However, such an RF transmission method is merely according to an embodiment, and if the rooms are structured to be directly interconnected through cables, the second TV 306 can be connected to the video storage apparatus 200 through a cable. That is, satellite channels can be transmitted to the second TV 306 through a UHF coaxial cable.

On the other hand, the RF remote control receiving unit 246 can be separately installed outside or embedded in the video storage apparatus 200. The RF remote control receiving unit 246 receives control signals of an RF method inputted from a second remote controller 404 placed in the second room. In this manner, a user in the second room can remotely control channel contents shown on the second TV 306 using wireless control signals of an RF method.

Users in the first and second rooms can respectively select and view a digital satellite broadcast to their own taste. A tuner contained in the video storage apparatus 200 demodulates and outputs two different broadcast signals, and users can independently view broadcast contents through the TV installed in each room. In addition, the broadcast contents outputted in the first and second rooms can be independently stored into the video storage apparatus 200 and played back through respective TVs.

For this purpose, the video storage apparatus 200 has constitutional components shown in Fig. 2.

High frequency digital satellite broadcast signals received from the parabola type satellite antenna 100 are inputted into a tuning unit. A first tuner 202 and a second tuner 204 included in the tuning unit demodulate and amplify the broadcast signals to be outputted through the first TV 302 and the second TV 306 and respectively output a transport stream signal TS1 and TS2.

A transport stream signal comprises a plurality of packetized elementary streams (PESs). The transport stream signal is raw data constructing high definition (HD) broadcasting, which is converted into an MPEG-2 video signal and an MPEG-1 audio signal through a demultiplexing process and outputted to the TV.

An electrically programmable logic device (EPLD) 206 controls the direction of the inputted TS signals and outputs descrambled data to the CPU. The TS signals are descrambled through a personal computer memory card interface association (PCMCIA, optional) and a smart card.

In DVB, an identification (ID) card, such as the smart card, should be inserted into the PCMCIA card of a common specification in order to descramble the TS signals. In an embedded type conditional access system (CAS), the CPU functions as a PCMCIA. If a user only inserts the ID card into a card reader (not shown) connected to a common interface 208, the CPU reads user information stored in the ID card and determines whether the user is authenticated. For this purpose, authentication information of the user can be stored in a first CPU 210.

The conditional access system can be implemented through such user authentication information stored in the first CPU 210.

The 188-byte digital packet signal outputted from the EPLD 206 is inputted into the CPU and converted into a video and an audio signal through a decoding process at the CPU.

One CPU can be used to control signals respectively in order to output the video and audio signals in at least two rooms. However, in the present invention, two independently driven CPUs are used to process the signals further efficiently.

A first memory 214 and a second memory 216 are respectively connected to the first CPU 210 and the second CPU 212. The first memory 214 comprises a flash read only memory (ROM) of 4MB and two synchronous dynamic random access memory (SDRAMs) of 16M * 16 bits, and the second memory 216 comprises a flash ROM of 2MB and a double-data-rate SDRAM (DDR-SDRAM) of 8M * 16 bits.

The first memory 214 and the second memory 216 store setting information of the TVs. A user who uses the video storage apparatus 200 can set broadcast channels outputted in each room or a state of an output method. For example, by setting information on preferred channels that the user frequently views, volume, password for protecting children from viewing a broadcast, language selection for on screen display (OSD), and the like, the user can conveniently view a broadcast to his or her tastes, and such setting information is stored in the memory in correspondence to each TV.

The HDD 218 stores the satellite broadcast signal outputted through the CPU. A conventional video recording apparatus uses a film type VCR 500 tape. However, as large volume digital storage apparatuses have been developed, the video and audio signals can be directly stored in the form of digital signals.

In the present invention, the video and audio signals outputted from the first CPU 210 and the second CPU 212 and transferred to the first TV 302 and the second TV 306 are stored by the TV. Accordingly, the first tuner 202 and the second tuner 204 respectively output one broadcast channel signal, and each TV can store contents of one broadcast while outputting another broadcast simultaneously.

A universal serial bus (USB) port 220 functions as an interface for receiving and transferring moving image data from an external storage apparatus, such as USB memory, to the CPU. In addition, the USB port also functions as an interface for transferring moving image broadcast data stored in the HDD 218 to an external personal computer (PC), portable media player (PMP), cellular phone, or the like.

The tuner, EPLD 206, CPU 210 and 212, memory 214 and 216, HDD 218, USB port 220, and the like are devices generally used for a digital satellite broadcast receiving apparatus, and thus further detailed descriptions thereof will be omitted.

A variety forms of the video signals and audio signals outputted through the CPU is transmitted to a specified TV through an AV switch matrix 222 and six multiplexers. Output terminals of a method of a scart connector, composite video broadband signal (CVBS), S-video, and RF modulator are provided for the first TV 302, and output terminals of a method of a CVBS and RF modulator are provided for the second TV 306.

The AV switch matrix 222 and two multiplexers transmit broadcast contents to the first TV 302, and four multiplexers transmit broadcast contents to the second TV 306.

First, the AV switch matrix 222 receives CVBS and audio right/left (R/L) signals outputted from each of the first CPU 210 and the second CPU 212. The AV switch matrix 222 basically selects and outputs either of the CVBS and audio R/L signals, which is used to output the CVBS and audio R/L signals of the second room to the first room, or vice versa.

Each of the first CPU 210 and the second CPU 212 outputs one Y/C signal (a composite color signal) and a Sony/Philips digital interface format (S/PDIF) signal, and the two Y/C signals and the two S/PDIF signals outputted from the CPUs are inputted into a first multiplexer 224. The first multiplexer 224 selects either of the inputted Y/C signals and either of the inputted S/PDIF signals and outputs the selected Y/C and S/PDIF signals to the AC switch matrix 222 and an S/PDIF output terminal respectively. The AV switch matrix 222 transmits the selected Y/C signal to the first TV 302. Accordingly, either of the Y/C signals and either of the S/PDID signals, which are outputted from the first CPU 210 and the second CPU 212 and selected by the first multiplexer 224, are transmitted to the first TV 302.

In addition, each of the first CPU 210 and the second CPU 212 outputs one RGB signal, and the RGB signals are inputted into a second multiplexer 226. The second multiplexer 226 selects either of the RGB signals and transmits the selected RGB signal to the first TV 302. Accordingly, either of the RGB signals, which are outputted from the first CPU 210 and the second CPU 212 and selected by the second multiplexer 226, is transmitted to the first TV 302.

As a result, a broadcast channel outputted to the first TV 302 is determined by the signals that the first multiplexer 224 and the second multiplexer 226 select. The signal selection of the first multiplexer 224 or the second multiplexer 226 is performed by the first CPU 210 in response to a control signal inputted from the first remote controller 402.

On the other hand, each of the first CPU 210 and the second CPU 212 outputs a set of CVBS and audio R/L signals into the a third multiplexer 228. The third multiplexer 228 selects either of the two sets of CVBS and audio R/L signals and outputs the selected CVBS and audio R/L signal set to the second TV 306. Accordingly, a broadcast channel outputted to the second TV 306 is determined by the third multiplexer 228.

An input side scart connector 238 is connected to an external video apparatus, i.e., the VCR 500, and receives a video and an audio signal, and an output side scart connector 240 transmits a video and an audio signal to the TV.

A fourth multiplexer 230 selects either the video and audio signals inputted through the input side scart connector 238 or the video and audio signals outputted through the output side scart connector 240, and outputs the selected video and audio signals to the second TV 306.

Accordingly, by the selection of the fourth multiplexer 230, the second TV 306 can select either the signal inputted from the VCR 500 or the signal outputted to the first TV 302 through the scart connector, and output the selected signal. That is, a viewer of the second TV 306 can select and view either the channel shown on the first TV 302 or the video inputted into the first TV 302 from the VCR 500.

A fifth multiplexer 232 selects either the CVBS and audio R/L signals inputted from the fourth multiplexer 228 or the video and audio signals outputted from the fourth multiplexer 230, and outputs the selected signals to the second TV 306. Therefore, the video and audio signals outputted in the first room can be viewed in the second room.

Finally, a sixth multiplexer 234 converts video and audio shown on the first TV 302 and the second TV 306 into an RF signal and outputs the converted RF signal to the RF modulator. The video and audio outputted from the RF modulator are transferred to the A/V receiver 308 in the second room through the A/V transmitter 304 and outputted through the second TV 306.

A user in the second room controls the operation of the second TV 306 using the second remote controller 404 of an RF method, and a control signal transmitted from the second remote controller 404 is inputted into the second CPU 212 through the RF remote control receiving unit 246. The second CPU 212 controls broadcast contents outputted through the second TV 306 in response to the control signal inputted from the second remote controller 404.

On the other hand, the CPU controls broadcast contents outputted through each TV, and if a user desires to view the broadcast contents of the second TV 306 while viewing the first TV 302, the first multiplexer 224 or the second multiplexer 226 selects video and audio transmitted to the second TV 306 and outputs the selected video and audio to the first TV 302. At this point, in order to let a user who views the second TV 306 know that the broadcast he or she views is also outputted through the first TV 302, an indication showing that the broadcast is viewed on the first TV 302 is outputted at an upper or a lower portion of the screen of the second TV 306.

Contrarily, when the contents outputted through the first TV 302 are viewed on the second TV 306, an indication showing that the broadcast is viewed at another place can be outputted on the screen of the first TV 302.

As describe above, broadcast contents can be selected or switched to another broadcast contents so that broadcast contents viewed at one place can be viewed at another place, and it may be preferable that only a user in the first room can select or switch broadcast contents. It is because that when the second TV 306 is installed in a child's room, the user can monitor the broadcast contents that children view and give proper directions on viewing a broadcast.

On the other hand, when satellite broadcasts are viewed in the first and second rooms, broadcast contents outputted through respective TVs can be swapped. In other words, if a room switch command is inputted through a remote controller, contents shown on the first TV 302 and the second TV 306 are swapped each other, and even setting information set for each TV is swapped, thereby changing broadcast viewing environments.

When a user desires to move the video storage apparatus 200 installed at a place to another place, in the case of a conventional apparatus, the receiver is moved to the another place, and cable connections and TV setting states should be reconfigured. However, the aforementioned swapping removes such inconveniences. The user does not need to reconfigure the cables connected to the antenna 100 or move the video storage apparatus 200 in order to move the video storage apparatus 200 installed in the living room to the master bedroom, and still could have the same effect as moving the video storage apparatus 200 with only one key input through the remote controller.

If a room switch command is issued, broadcast contents outputted through the first TV 302 and the second TV 306 are completely swapped, and thus broadcast contents outputted from the second CPU 212 is displayed on the first TV 302, and broadcast contents outputted from the first CPU 210 is displayed on the second TV 306.

If a room switch command is issued, the first multiplexer 224 outputs the other Y/C and S/PDIF signals that are not selected before, instead of the signals currently outputted to the first TV 302, to the AV switch matrix 222 and the S/PDIF output terminal.

In addition, the second multiplexer 226 also outputs the other RGB signal, instead of the currently outputted RGB signal, to the AV switch matrix 222.

The third multiplexer 228 outputs the other CVBS and audio R/L signals through the second TV 306, instead of the CVBS and audio R/L signals currently outputted through the second TV 306, and the fourth multiplexer 230 outputs the other video and audio signals.

The fifth multiplexer 232 selects either the other CVBS and audio R/L signals inputted from the third multiplexer 228 or the other video and audio signals inputted from the fourth multiplexer 230, and outputs the selected signals to the second TV 306, and the second TV 306 outputs the swapped video and audio.

On the other hand, before the room switch, the first CPU 210 is controlled by the first remote controller 402 of an infrared method, and the second CPU 212 is controlled by the second remote controller 404 an RF method. However, since control methods of the remote controllers are also swapped after the room switch, the first CPU 210 is controlled by the second remote controller 404 an RF method, and the second CPU 212 is controlled by the first remote controller 402 of an infrared method.

Although not shown in the figure, the video storage apparatus 200 of the present invention is provided with an RS-232C type communication interface, and firmware upgrades are accomplished through the RS-232C type communication interface.

In addition, users in the first and second rooms can use a simple messenger function using the video storage apparatus 200 of the present invention.

That is, a user can display simple sentences, emoticons, icons, or the like on the screens of the first TV 302 and the second TV 306 using the remote controller. For example, the user viewing the first TV 302 can call the other user by selecting the messenger function using the first remote controller 402 and transmitting a sentence saying "Come to my room" (a previously stored sentence that can be selected through a scroll function) to the second TV 306.

In order to efficiently implement such a function, a user previously stores frequently used sentences and scrolls the sentences to select a specific sentence. In addition, the user can create and store character messages or certain sentences into memory using a personal computer, cellular phone, PDA, notebook computer, or the like.

When a user sends a character message from one room to another room, if a window similar to a conventional messenger dialog window is popped up on each TV screen, and real-time character chatting is allowed through the dialog window in a manner similar to a messenger, users could further conveniently chat with each other.

If this concept is further expanded, users can store a simple game program in the memory and simultaneously execute the game program in both of the rooms to play a one-to-one game.

Second embodiment

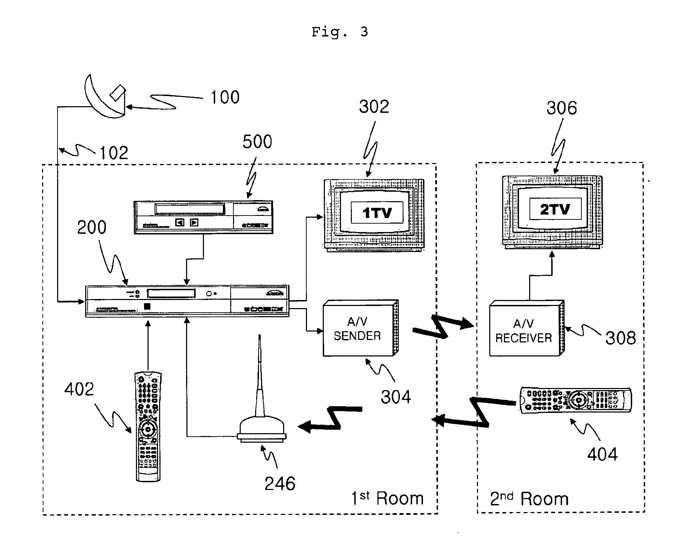

FIG. 3 a configuration diagram showing the connectivity of a video storage apparatus 200 according to a second embodiment of the present invention.

The VCR 500, i.e., an external video apparatus, is additionally connected to the video storage apparatus 200 according to the second embodiment. The video storage apparatus 200 transmits a video and an audio signal inputted from the VCR 500 to the first TV 302 or the second TV-306 depending on a user's selection.

In addition, a user of the second TV 306 also can view in the second room the contents of the VCR 500 outputted through the first TV 302.

The VCR 500 is generally connected to the input side scart connector 238 provided to the video storage apparatus 200.

Third embodiment

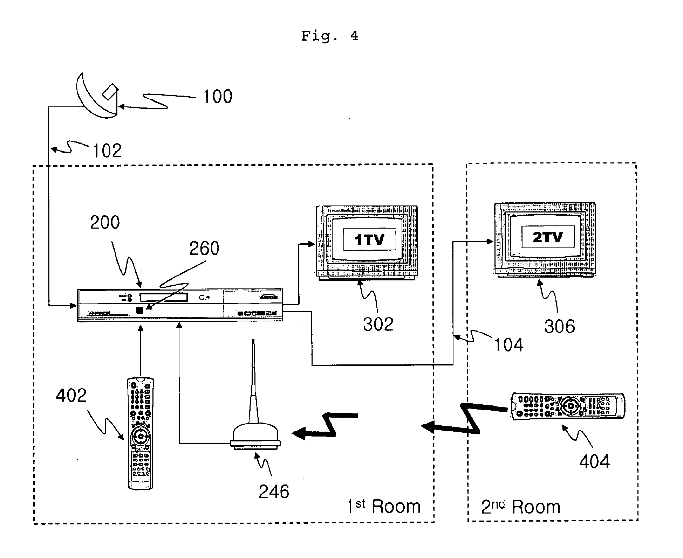

FIG. 4 a configuration diagram showing the connectivity of a video storage apparatus 200 according to a third embodiment of the present invention.

In the third embodiment, contrarily to the second embodiment, the video and audio signals outputted from the video storage apparatus 200 are transferred not wirelessly, but through a UHF coaxial cable 104.

That is, a UHF coaxial cable 104 connected to the video storage apparatus 200 is directly connected to the second TV 306, and the video and audio signals are transferred through the cable.

Then, through the coaxial cable, video signals are inputted from the antenna 100, and furthermore, video and audio signals outputted from the first TV 302 or the second TV 306 can be transferred to a counterpart TV.

Since video and audio signals are transferred through a cable, not in an RF method, further stable transmission will be accomplished with a small loss.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

In the present invention, it is described that there are two CPUs. However, it is sufficiently possible to simultaneously process two video and audio signals using one CPU capable of multicasting.

According to the present invention, it is possible to view different satellite broadcasts in two rooms using a set-top box or a video storage apparatus, and broadcast contents shown in each room can be independently stored or played back.

Further, according to the present invention, it is effective in that a user can conveniently switch broadcast contents by inputting a room switch command without moving any of TVs, video storage apparatus, antenna cable, and the like.

## Claims

1. A multi-room personal storage apparatus comprising:
a plurality of tuners for demodulating two channels contained in a digital satellite broadcast signal and generating and outputting two transport stream (TS) signals;
a plurality of CPUs for converting the two transport stream signals inputted from the tuners into two video and audio signals and outputting the converted video and audio signals;
a plurality of multiplexers for selecting TVs to which the two video and audio signals are outputted under the control of the CPUs;
an AV switch matrix for outputting the video and audio signals outputted from the multiplexers to a selected TV; and
a scart connector for receiving a video and an audio signal inputted from a video cassette recorder (VCR) and transmitting the video and audio signals that are outputted to the TV,
wherein the TVs comprises a first TV and a second TV respectively installed in a first room and a second room which are spatially separated each other.

2. The apparatus according to claim 1, wherein the multiplexers comprise:
a first multiplexer for selecting a Y/C signal (a composite color signal) and outputting the selected Y/C signal to the AV switch matrix if two Y/C signals are inputted thereto from the CPUs; and
a second multiplexer for selecting an RGB signal and outputting the selected RGB signal to the AV switch matrix if two RGB signals are inputted thereto from the CPUs, and
wherein the AV switch matrix transmits the Y/C signal or the RGB signal, which is outputted from the first multiplexer or the second multiplexer, to the first TV and displays the Y/C signal or the RGB signal on the first TV.

3. The apparatus according to claim 2, wherein the first multiplexer selects an S/PDIF signal and outputs the selected S/PDIF signal to an S/PDIF output terminal if two S/PDIF signals are inputted thereto from the CPUs, and the S/PDIF output terminal transmits the S/PDIF signal, which is outputted from the first multiplexer, to a separate audio apparatus and outputs the S/PDIF signal.

4. The apparatus according to claim 1, wherein the multiplexers further comprise:
a third multiplexer for selecting and outputting a set of CVBS and audio R/L signals if two sets of CVBS and audio R/L signals are inputted thereto from the CPUs;
a fourth multiplexer connected to the scart connector, for selecting and outputting either the video and audio signals inputted from the VCR or the video and audio signals outputted to the first TV; and
a fifth multiplexer for selecting and outputting either the CVBS and audio R/L signals inputted from the third multiplexer or the video and audio signals outputted from the fourth multiplexer,
wherein the signals outputted from the fifth multiplexer are transmitted to the second TV and outputted through the second TV.

5. The apparatus according to claim 4, wherein the multiplexers further comprise:
a sixth multiplexer for converting the signals outputted from the fifth multiplexer into a radio frequency (RF) signal and outputting the converted RF signal to an RF modulator,
wherein the RF modulator transmits the RF signal to the second TV and outputs the RF signal through the second TV.

6. The apparatus according to claim 2 or 4, further comprising:
a hard disk drive (HDD) for recording and storing the video and audio signals.

7. The apparatus according to claim 1, further comprising:
an RF remote control receiving unit for receiving a control signal of an RF method inputted from a second remote controller placed in the second room,
wherein the RF remote control receiving unit is placed in the first room and transmits the control signal to the CPU.

8. The apparatus according to claim 1, further comprising:
memory for storing data on setting information by the TV, wherein the data is stored if a user selects any one of a preferred channel, volume, password, language selection, and the like, and sets information thereon.

9. The apparatus according to claim 3, wherein
the first multiplexer outputs the other Y/C and S/PDIF signals respectively to the AV switch matrix and the S/PDIF output terminal if a room switch command is inputted thereto from the CPU,
the second multiplexer outputs the other RGB signal to the AV switch matrix if a room switch command is inputted thereto from the CPU,
the AV switch matrix transmits the Y/C signal or the RGB signal outputted from the first multiplexer or the second multiplexer to the first TV to allow the transmitted signal to be displayed on the first TV, and
the S/PDIF output terminal transmits the S/PDIF signal outputted from the first multiplexer to a separate audio apparatus to allow the transmitted S/PDIF signal to be outputted to the outside through the audio apparatus.

10. The apparatus according to claim 4, wherein
the third multiplexer outputs the other CVBS and audio R/L signals if a room switch command is inputted thereto from the CPU,
the fourth multiplexer outputs the other video and audio signals if a room switch command is inputted thereto from the CPU, and
the fifth multiplexer selects either the other CVBS and audio R/L signals inputted from the third multiplexer or the other video and audio signals outputted from the fourth multiplexer and transmits the selected signals to the second TV.
